(19) Europäisches Patentamt
European Patent Office
Office européen des brevets

(11) **EP 4 156 351 A1**

(12) **EUROPEAN PATENT APPLICATION**
published in accordance with Art. 153(4) EPC

(43) Date of publication:
**29.03.2023 Bulletin 2023/13**

(21) Application number: **21915533.0**

(22) Date of filing: **24.11.2021**

(51) International Patent Classification (IPC):
*H01M 8/1067* (2016.01)    *H01M 8/1053* (2016.01)
*H01M 8/1058* (2016.01)    *H01M 8/1004* (2016.01)

(52) Cooperative Patent Classification (CPC):
H01M 8/1004; H01M 8/1053; H01M 8/1058;
H01M 8/1067

(86) International application number:
**PCT/KR2021/017389**

(87) International publication number:
**WO 2022/145735 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020 KR 20200188258**

(71) Applicant: **Kolon Industries, Inc.**
**Seoul 07793 (KR)**

(72) Inventors:
• **LEE, Eunsu**
**Seoul 07793 (KR)**
• **LEE, Donghoon**
**Seoul 07793 (KR)**
• **PARK, Junghwa**
**Seoul 07793 (KR)**
• **LEE, Hyesong**
**Seoul 07793 (KR)**

(74) Representative: **Ter Meer Steinmeister & Partner**
**Patentanwälte mbB**
**Nymphenburger Straße 4**
**80335 München (DE)**

(54) **POLYMER ELECTROLYTE MEMBRANE AND MEMBRANE-ELECTRODE ASSEMBLY COMPRISING SAME**

(57) Disclosed are a polymer electrolyte membrane and a membrane-electrode assembly comprising same, the membrane having, without a deterioration in performance such as ion conductivity, excellent mechanical properties, so as to ensure the manufacture of a membrane-electrode assembly having such high durability that the wet/dry cycle, which is measured according to accelerated durability test method of a NEDO protocol, is 30,000 times or more. The polymer electrolyte membrane of the present invention comprises: a porous support having a plurality of pores; and a composite layer including ionomers that fill the pores, wherein the ratio (IS/FS) of the stab initial strain (IS) of the polymer electrolyte membrane to the stab final strain (FS) of the polymer electrolyte membrane is 0.4 to 1.0.

FIG. 1

**Description**

[Technical Field]

The present disclosure relates to a polymer electrolyte membrane and a membrane-electrode assembly including the same, and more particularly to a polymer electrolyte membrane having excellent mechanical properties without degradation in performance, such as ionic conductivity, whereby it is possible to guarantee manufacture of a membrane-electrode assembly having a high durability of 30,000 wet/dry cycles or more as measured according to an accelerated durability test method of the NEDO protocol, and a membrane-electrode assembly including the same.

[Background Art]

A polymer electrolyte membrane fuel cell (PEMFC), which is configured to generate electricity using a structure in which unit cells, each of which includes a membrane-electrode assembly (MEA) and a separator (also referred to as a bipolar plate), are stacked, has attracted attention as a next-generation energy source capable of replacing fossil fuels due to high energy efficiency and environmentally friendly characteristics thereof.

The membrane-electrode assembly generally includes an anode (also referred to as a fuel electrode), a cathode (also referred to as an air electrode), and a polymer electrolyte membrane (PEM) therebetween.

When fuel such as hydrogen gas is supplied to the anode, hydrogen ions ($H^+$) and electrons ($e^-$) are generated at the anode as the result of hydrogen oxidation reaction. The generated hydrogen ions are transferred to the cathode via the polymer electrolyte membrane (PEM), and the generated electrons are transferred to the cathode via an external circuit. Oxygen in air supplied to the cathode is combined with the hydrogen ions and the electrons, and water is generated as the result of reduction.

There are many technical problems to be solved in order to realize commercial use of polymer electrolyte membrane fuel cells. It is essentially necessary to realize high performance, a long lifespan, and a reduction in the price of the polymer electrolyte membrane fuel cell. The element that exerts the greatest influence thereon is the membrane-electrode assembly, and the polymer electrolyte membrane is one of the core factors that exert the greatest influence on the performance and price of the membrane-electrode assembly.

In particular, for a membrane-electrode assembly applied to a fuel cell for transportation, it is most important to secure mechanical durability of the membrane-electrode assembly for long-term operation thereof. In general, mechanical durability of the membrane-electrode assembly substantially depends on durability of the polymer electrolyte membrane that repeatedly expands and contracts during driving of the fuel cell.

In order to increase mechanical durability of the polymer electrolyte membrane, a reinforced composite membrane type polymer electrolyte membrane manufactured by impregnating a porous support with an ionomer dispersion liquid has been proposed. As the thickness of the porous support is increased, however, electrical performance, such as ionic conductivity, of the polymer electrolyte membrane is deteriorated (i.e. ionic conductivity thereof is lowered), whereby it is not possible to increase the thickness of the porous support without limit. Consequently, it is known that there is a limitation in improving mechanical durability of the polymer electrolyte membrane through adjustment in thickness of the porous support due to such a trade-off between mechanical durability and ionic conductivity.

Meanwhile, mechanical durability of the membrane-electrode assembly is generally evaluated by measuring the number of wet/dry cycles according to an accelerated durability test method of the NEDO protocol, wherein a long time (50 days or more) is incurred for such evaluation. Furthermore, a membrane-electrode assembly sample must be manufactured in order to evaluate durability of the membrane-electrode assembly, and therefore (i) a lot of time is taken to manufacture the membrane-electrode assembly sample necessary for durability evaluation, and (ii) a precious metal is used in order to form electrodes, whereby it costs too much to manufacture the membrane-electrode assembly sample.

[Disclosure]

[Technical Problem]

Therefore, the present disclosure relates to a polymer electrolyte membrane capable of preventing problems caused by limitations and shortcomings of the related art described above and a membrane-electrode assembly including the same.

It is an object of the present disclosure to provide a polymer electrolyte membrane having excellent mechanical properties without degradation in performance, such as ionic conductivity, whereby it is possible to guarantee manufacture of a membrane-electrode assembly having a high durability of 30,000 wet/dry cycles or more as measured according to an accelerated durability test method of the NEDO protocol.

It is another object of the present disclosure to provide a membrane-electrode assembly including a polymer electrolyte membrane having excellent mechanical properties without degradation in performance, such as ionic conductivity, thereby having a high durability of 30,000 wet/dry cycles or more as measured according to the accelerated durability test method of the NEDO protocol.

In addition to the above objects of the present disclosure, other features and advantages of the present disclosure will be described hereinafter or will be clearly understood by those skilled in the art to which the present disclosure pertains from the following description thereof.

[Technical Solution]

In accordance with an aspect of the present disclosure, there is provided a polymer electrolyte membrane including a composite layer, wherein the composite layer includes a porous support having a plurality of pores and an ionomer with which the pores are filled, wherein the ratio (IS/FS) of stab initial strain (IS) of the polymer electrolyte membrane to stab final strain (FS) of the polymer electrolyte membrane is 0.4 to 1.0.

The polymer electrolyte membrane may have an in-plane ionic conductivity of 0.03 to 0.1 S/cm and a through-plane ionic conductivity of 0.03 to 0.1 S/cm under conditions of 80°C and 50% RH.

The polymer electrolyte membrane may have a stab initial strain (IS) of 1 to 6% and a stab final strain (FS) of 2 to 8%.

The composite layer may have a first surface and a second surface opposite the first surface, the polymer electrolyte membrane may further include a first pure layer disposed on the first surface, the first pure layer including a first ionomer, and a second pure layer disposed on the second surface, the second pure layer including a second ionomer, and the thickness of the composite layer may be 30 to 80% of the thickness of the polymer electrolyte membrane.

The thickness of the polymer electrolyte membrane may be 10 to 50 $\mu$m.

At least a portion of the ionomer in the composite layer may be identical to at least one of the first ionomer and the second ionomer.

The porous support may include a first porous sub-support having the first surface and a second porous sub-support having the second surface, the first porous sub-support may have first pores filled with an ionomer identical to the first ionomer, the second porous sub-support may have second pores, some of the second pores, which are adjacent to the first porous sub-support, may be filled with an ionomer identical to the first ionomer, and the remainder of the second pores, which are adjacent to the second pure layer, may be filled with an ionomer identical to the second ionomer.

The first and second porous sub-supports may be in contact with each other.

The porous support may include a first porous sub-support having the first surface, a second porous sub-support having the second surface, and at least one third porous sub-support disposed between the first and second porous sub-supports, and the first, second, and third porous sub-supports may be in contact with each other.

The first ionomer may be identical to the second ionomer.

In accordance with another aspect of the present disclosure, there is provided a membrane-electrode assembly including an anode, a cathode, and the polymer electrolyte membrane, the polymer electrolyte membrane being disposed between the anode and the cathode.

The general description of the present disclosure given above is provided merely to illustrate or describe the present disclosure, and does not limit the scope of rights of the present disclosure.

[Advantageous Effects]

According to the present disclosure, it is possible to provide a polymer electrolyte membrane having excellent mechanical durability and ionic conductivity while overcoming a biased view of industry in that there is a trade-off between mechanical durability and ionic conductivity of the polymer electrolyte membrane.

In particular, the polymer electrolyte membrane according to the present disclosure has excellent mechanical durability to such an extent that the ratio of stab initial strain IS of the polymer electrolyte membrane to stab final strain FS of the polymer electrolyte membrane (hereinafter referred to as the "IS/FS ratio") is 0.4 to 1.0, whereby it is possible to guarantee manufacture of a membrane-electrode assembly having a high durability of 30,000 wet/dry cycles or more as measured according to an accelerated durability test method of the NEDO protocol. In addition, the polymer electrolyte membrane exhibits excellent performance to such an extent that both in-plane and through-plane ionic conductivities thereof are 0.03 to 0.1 S/cm under conditions of 80°C and 50 %RH although the polymer electrolyte membrane has such excellent mechanical durability.

In addition, according to the present disclosure, it has been found that mechanical durability of the membrane-electrode assembly generally measured according to the accelerated durability test method of the NEDO protocol is directly related to the IS/FS ratio of the polymer electrolyte membrane. In a manufacturing step of the polymer electrolyte membrane, therefore, the IS/FS ratio of the polymer electrolyte membrane is measured, whereby it is possible to easily predict mechanical durability of a membrane-electrode assembly to be manufactured using the polymer electrolyte membrane without actual manufacture of the membrane-electrode assembly, and therefore it is possible to considerably reduce time and cost necessary for research and development of the membrane-electrode assembly and a fuel cell.

[Description of Drawings]

The accompanying drawings, which assist in understanding of the present disclosure and constitute a part of the present specification, explain the principles of the present disclosure together with the detailed description of the present disclosure.

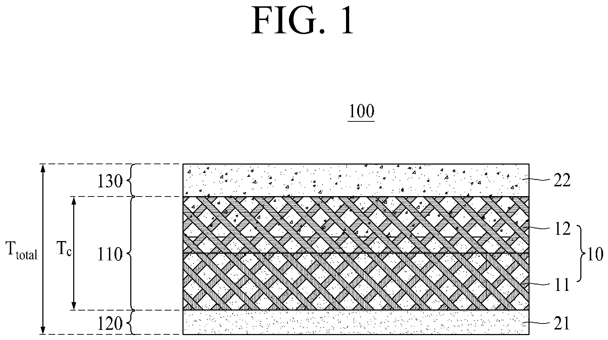

FIG. 1 is a sectional view of a polymer electrolyte membrane according to an embodiment of the present disclosure.

[Best Mode]

Hereinafter, embodiments of the present disclosure will be described in detail with reference to the accompanying drawings.
FIG. 1 is a sectional view of a polymer electrolyte membrane 100 according to an embodiment of the present disclosure.
As illustrated in FIG. 1, the polymer electrolyte membrane 100 according to the present disclosure includes a composite layer 110 comprising a porous support 10 having a plurality of pores and ionomers 21 and 22 with which the pores are filled.
The porous support 10 may include a perfluorinated polymer having high resistance to thermal and chemical decomposition (e.g. polytetrafluoroethylene (PTFE) or a copolymer of polytetrafluoroethylene and $CF_2=CFC_nF_{2n+1}$ (n being a real number of 1 to 5) or $CF_2=CFO-(CF_2CF(CF_3)O)_mC_nF_{2n+1}$ (m being a real number of 0 to 15, n being a real number of 1 to 15)). As a non-exclusive example, an expanded polytetrafluoroethylene film (e-PTFE film), which is commercially sold, may be used as the porous support 10.
Alternatively, the porous support 10 may be a nonwoven web made of a hydrocarbon-based polymer. For example, the porous support 10 may be a nanoweb in which nanofibers having an average diameter of 40 to 5000 nm are randomly arranged. The hydrocarbon-based polymer may be a polymer that has excellent chemical resistance and that has no risk of deformation due to moisture in a high humidity environment, such as aliphatic polyamide, aromatic polyamide, polyimide, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamide imide, polyethylene terephthalate, polyphenylene sulfide, polyethylene, polypropylene, a copolymer of two or more thereof, or a mixture of two or more thereof. In particular, polyimide is one of preferred candidate materials for forming the porous support 10 in that polyimide has excellent heat resistance, chemical resistance, and dimensional stability.
The porosity of the porous support 10 may be 45% or more, preferably 50% or more, more preferably 60 to 90%. If the porosity of the porous support 10 is less than 45%, the amount of the ionomers in the porous support 10 is too small, whereby ionic conductivity of the polymer electrolyte membrane 100 is lowered. If the porosity of the porous support 10 is greater than 90%, on the other hand, the inherent reinforcement function of the porous support may not be fulfilled, and dimensional stability of the porous support may be lowered, and therefore subsequent processes may not be smoothly performed.
Each of the ionomers 21 and 22 is a cationic conductor having a cation exchange group or an anionic conductor having an anion exchange group.
The cationic conductor may be a fluorine-based polymer including at least one cation exchange group selected from the group consisting of a sulfonic acid group, a carboxyl group, a boronic acid group, a phosphate group, an imide group, a sulfonimide group, a sulfonamide group, a sulfonic acid fluoride group, and a derivative thereof. For example, the cationic conductor may be, but is not limited to, a copolymer of tetrafluoroethylene and fluoro vinyl ether including poly(perfluorosulfonic acid), poly(perfluorocarboxylic acid), and a sulfonic acid group, defluorinated polyetherketone sulfide, or a mixture of two or more thereof.
Alternatively, the cationic conductor may be a hydrocarbon-based polymer including at least one cation exchange group selected from the group consisting of a sulfonic acid group, a carboxyl group, a boronic acid group, a phosphate group, an imide group, a sulfonimide group, a sulfonamide group, a sulfonic acid fluoride group, and a derivative thereof. For example, the cationic conductor may be, but is not limited to, sulfonated polyimide (S-PI), sulfonated polyarylether sulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture of two or more thereof.

The anionic conductor is a polymer capable of transferring anions. A polymer doped with metal hydroxide may generally be used as the anionic conductor. Specifically, poly(ether sulfone), polystyrene, a vinyl-based polymer, poly(vinyl chloride), poly(vinylidene fluoride), poly(tetrafluoroethylene), poly(benzimidazole), or poly(ethylene glycol) doped with metal hydroxide may be used as the anionic conductor.

The polymer electrolyte membrane 100 according to the present disclosure has an MD tear strength of 150 N/mm or more (e.g. 170 to 320 N/mm) and a TD tear strength of 150 N/mm or more (e.g. 160 to 320 N/mm).

The terms "MD" and "TD" as used in this description mean "machine direction" and "traverse direction", respectively. "Machine direction" is a direction in which the polymer electrolyte membrane 100 is moved when manufactured, and "traverse direction" is a direction perpendicular to "machine direction".

In the present disclosure, "tear strength" of the polymer electrolyte membrane 100 is measured as follows.

[Tear strength]

A sample of 50 mm x 50 mm is taken, and the maximum force applied to the sample until the sample is torn is measured under the following conditions according to ASTM D624 using a universal test machine (UTM) (Instron 5966).

- Temperature: $23\pm2$ °C
- Relative humidity: $50\pm5\%$
- Test speed: $500\pm50$ mm/min

Subsequently, tear strength of the sample is calculated using Equation 1 below.

$$[\text{Equation 1}]: TS = F/d$$

Where TS indicates tear strength (N/mm) of the sample, F indicates the maximum force (N) applied to the sample, and d indicates a median thickness (mm), which is the arithmetic mean of the sample thicknesses measured at three points of the sample in a central portion thereof.

In the same manner as above, tear strengths of five samples are acquired, and the arithmetic mean thereof is calculated, whereby tear strength of the polymer electrolyte membrane 100 is obtained.

Even though the polymer electrolyte membrane 100 has the above-specified ranges of MD tear strength and TD tear strength, a membrane-electrode assembly manufactured using such polymer electrolyte membrane 100 according to a conventional method does not always satisfy the high durability required by the industry (i.e. wet/dry cycles measured according to an accelerated durability test method of the NEDO protocol > 30,000 times). In other words, while being necessary conditions for satisfying the 30,000 wet/dry cycles or more, the MD tear strength of 150 N/mm or more and TD tear strength of 150 N/mm or more cannot be sufficient conditions therefor.

Even though the polymer electrolyte membrane 100 has an MD tear strength of 150 N/mm or more and a TD tear strength of 150 N/mm or more, therefore, it is required to actually manufacture a membrane-electrode assembly sample and to perform a durability test according to the accelerated durability test method of the NEDO protocol in order to check whether a membrane-electrode assembly manufactured using the polymer electrolyte membrane according to a general method has sufficient durability. This requires a lot of time and causes cost increase.

According to the present disclosure, it has been found that, when a polymer electrolyte membrane 100 having an MD tear strength of 150 N/mm or more and a TD tear strength of 150 N/mm or more has an IS/FS ratio (i.e. a ratio of stab initial strain IS to stab final strain FS) of 0.4 to 1.0, a membrane-electrode assembly manufactured using such polymer electrolyte membrane according to a conventional method always satisfies 30,000 wet/dry cycles or more. According to the present disclosure, therefore, by measuring a IS/FS ratio of a polymer electrolyte membrane, it is possible to check whether or not a membrane-electrode assembly to be manufactured using the polymer electrolyte membrane would satisfy the mechanical durability required by the industry without actually manufacturing the membrane-electrode assembly. As a result, it is possible to considerably reduce time and cost necessary for research and development of a membrane-electrode assembly and a fuel cell.

In the present disclosure, "stab initial strain IS" and "stab final strain FS" of the polymer electrolyte membrane 100 are measured as follows.

[Stab initial strain and stab final strain]

A sample of 50 mm x 50 mm is taken, and stab resistance of the sample is measured using a universal test machine (UTM) (Instron 5966). A jig for puncture testing (sample holder and probe) according to ASTM F1342 provided by Instron Company is used as an accessory for repeated stabs. Specifically, stabs (load: 10 N) are repeatedly performed using a probe under the following conditions after fixing the sample to the holder (the distance from a base level to the sample: 100 mm), and a decrease in the distance (i.e. "displacement") due to each stab is measured. At this time, displacement under a load of 0.2 N is regarded as a zero point.

- Temperature: 23±2 °C
- Relative humidity: 50±5%
- Mode: Compression mode
- Cycle period: 20 times
- Test speed: 100 mm/min

Strain when stabs (load: 10 N) are repeatedly performed twice using the probe (i.e. "stab initial strain IS") and strain when stabs (load: 10 N) are repeatedly performed 20 times using the probe (i.e. "stab final strain FS") are calculated by Equations 1 and 2 below, respectively.

$$[\text{Equation 2}]: \text{IS } (\%) = [(D_2 - D_1)/D_1] \times 100$$

$$[\text{Equation 3}]: \text{FS } (\%) = [(D_{20} - D_1)/D_1] \times 100$$

Where IS indicates stab initial strain, FS indicates stab final strain, $D_1$ indicates displacement (mm) caused due to the first stab, $D_2$ indicates displacement (mm) caused due to the second stab, and $D_{20}$ indicates displacement (mm) caused due to the twentieth stab.

The polymer electrolyte membrane 100 according to the present disclosure has an IS/FS ratio of 0.4 to 1.0, and therefore it is possible to guarantee manufacture of a highly durable membrane-electrode assembly having 30,000 wet/dry cycles or more as measured according to the accelerated durability test method of the NEDO protocol.

In the embodiment of the present disclosure, the polymer electrolyte membrane 100 may have a stab initial strain IS of 1 to 6% and a stab final strain FS of 2 to 8%.

According to the present disclosure, the polymer electrolyte membrane 100 may have an in-plane ionic conductivity of 0.03 to 0.1 S/cm, more specifically 0.040 to 0.1 S/cm, even more specifically 0.040 to 0.050 S/cm, and a through-plane ionic conductivity of 0.03 to 0.1 S/cm, more specifically 0.038 to 0.1 S/cm, even more specifically 0.038 to 0.045 S/cm, under conditions of 80°C and 50% RH (detailed reasons why the polymer electrolyte membrane 100 according to the present disclosure has high ionic conductivity while having excellent mechanical properties will be described below).

Consequently, the polymer electrolyte membrane 100 according to the embodiment of the present disclosure has excellent mechanical properties (i.e. an IS/FS ratio of 0.4 to 1.0) without degradation in performance, such as ionic conductivity, whereby it is possible to guarantee manufacture of a membrane-electrode assembly having excellent electrical performance while having a high durability of 30,000 wet/dry cycles or more.

In the present disclosure, in-plane ionic conductivity and through-plane ionic conductivity of the polymer electrolyte membrane 100 are measured using the following methods.

[In-plane ionic conductivity]

In-plane ionic conductivity of the polymer electrolyte membrane 100 is measured at 80°C and 50% RH using a magnetic suspension balance apparatus (Bell Japan Company).

[Through-plane ionic conductivity]

Through-plane ionic conductivity of the polymer electrolyte membrane 100 is measured using a through-plane membrane test system (Scribner Associates, MTS 740) according to a constant current four-terminal method. Specifically, an alternating current potential difference generated in a sample (10 mm x 30 mm) is measured while applying alternating current to opposite sides of the sample under conditions of 80°C and 50% RH to obtain membrane resistance R (S2). Subsequently, through-plane ionic conductivity of the polymer electrolyte membrane 100 is calculated using Equation 4 below.

$$[\text{Equation 4}]: \sigma = L/[R \times A]$$

(Where $\sigma$ indicates through-plane ionic conductivity (S/cm), L indicates the distance (cm) between electrodes, R indicates membrane resistance (S2), and A indicates effective area (cm$^2$) of the membrane.)

As illustrated in FIG. 1, according to the embodiment of the present disclosure, the composite layer 110 may have a first surface and a second surface opposite the first surface, and the polymer electrolyte membrane 100 may further include a first pure layer 120 disposed on the first surface and a second pure layer 130 disposed on the second surface.

The first pure layer 120 may include a first ionomer 21, and the second pure layer 130 may include a second ionomer 22.

At least a portion of an ionomer in the composite layer 110 may be identical to at least one of the first ionomer 21 of the first pure layer 120 and the second ionomer 22 of the second pure layer 130.

In the embodiment of the present disclosure, the thickness $T_{total}$ of the polymer electrolyte membrane 100 may be 10 to 50 $\mu$m, and the thickness $T_c$ of the composite layer 110 may be 30 to 80%, more preferably 35 to 75%, even more preferably 40 to 70%, of the thickness $T_{total}$ of the polymer electrolyte membrane 100.

That is, in the embodiment of the present disclosure, the thickness $T_c$ of the composite layer 110 is 30% or more, more preferably 35% or more, even more preferably 40% or more, of the thickness $T_{total}$ of the polymer electrolyte membrane 100, whereby the polymer electrolyte membrane 100 may have excellent mechanical properties (i.e. an IS/FS ratio of 0.4 to 1.0) to such an extent that it is possible to guarantee the manufacture of a membrane-electrode assembly having a high durability of 30,000 wet/dry cycles or more.

In contrast, if the thickness $T_c$ of the composite layer 110 exceeds 80% of the thickness $T_{total}$ of the polymer electrolyte membrane 100 (i.e. each of the first and second pure layers 120 and 130 is relatively too thin), it is difficult for the polymer electrolyte membrane 100 to have such a high ionic conductivity within the range of the present disclosure.

As illustrated in FIG. 1, the porous support 10 according to the embodiment of the present disclosure includes a first porous sub-support 11 and a second porous sub-support 12.

The first porous sub-support 11 has the first surface of the composite layer 110. That is, one surface of the first porous sub-support 11 constitutes the first surface of the composite layer 110. Similarly, the second porous sub-support 12 has the second surface of the composite layer 110. That is, one surface of the second porous sub-support 12 constitutes the second surface of the composite layer 110.

The first and second porous sub-supports 11 and 12 may be the same kind of supports or different kinds of supports. For example, both the first and second porous sub-supports 11 and 12 may be e-PTFE films, or both the first and second porous sub-supports 11 and 12 may be nonwoven webs. When both the first and second porous sub-supports 11 and 12 are e-PTFE films, the sub-supports may be stacked such that expansion directions thereof are perpendicular to each other.

As illustrated in FIG. 1, the first and second porous sub-supports 11 and 12 may be in contact with each other. Since the first and second porous sub-supports 11 and 12 are in tight contact with each other, it may be impossible to visually check the interface therebetween, unless the sub-supports are different kinds of porous supports distinguishable from each other. That is, the porous support 10 may be an apparent single porous support.

The polymer electrolyte membrane 100 according to the embodiment of the present disclosure having the first and second porous sub-supports 11 and 12 provides many advantages in several aspects, compared to a polymer electrolyte membrane reinforced by an actual single porous support having the same thickness as the porous support 10 (i.e. capable of providing the same or similar mechanical properties as or to the porous support 10). For example, according to the embodiment of the present disclosure, compared to the case in which an actual single porous support having the same thickness as the porous support 10 is impregnated with an ionomer, (i) in an ionomer impregnation process, the surface area of the porous support 10 that directly contacts the ionomer is larger, whereby wetting of the porous support 10 by an ionomer solution or a dispersion liquid is better done, and therefore it is possible to minimize the ionic conductivity deterioration of the polymer electrolyte membrane 100 due to use of the support (i.e. air in the pores of the support 10 is better discharged and the empty spaces are filled with the ionomer, whereby preventing microbubbles which adversely affect the ionic conductivity in the final polymer electrolyte membrane 100 from remaining, and therefore a water channel, which provides a movement path for hydrogen ions, is well formed in the through-plane direction of the support 10), and (ii) the area capable of absorbing deformation of the polymer electrolyte membrane 100 is increased, whereby stab strain of the polymer electrolyte membrane 100 may be further lowered (i.e. stab resistance may be improved).

As a result, the polymer electrolyte membrane 100 according to the embodiment of the present disclosure having the first and second porous sub-supports 11 and 12 may have excellent mechanical properties without degradation in performance, such as ionic conductivity.

Also, in the embodiment of the present disclosure, the ratio of MD tensile elongation to TD tensile elongation (hereinafter referred to as the "MD/TD tensile elongation ratio") of each of the first and second porous sub-supports 11 and 12 may be 0.9 to 1.5, more specifically 1 to 1.3. That is, in the embodiment of the present disclosure, a highly isotropic support having a MD/TD tensile elongation ratio within the above range may be used as each of the first and second porous sub-supports 11 and 12, whereby it is possible to manufacture a polymer electrolyte membrane 100 having excellent mechanical properties (i.e. an IS/FS ratio of 0.4 to 1.0) to such an extent that it is possible to guarantee manufacture of a membrane-electrode assembly having a high durability of 30,000 wet/dry cycles or more.

The first porous sub-support 11 may have a plurality of first pores, wherein the first pores may be filled with the same ionomer as the first ionomer 21 of the first pure layer 120.

The second porous sub-support 12 may have a plurality of second pores, wherein some of the second pores, which are adjacent to the first porous sub-support 11, may be filled with the same ionomer as the first ionomer 21 of the first pure layer 120, and the remainder of the second pores, which are adjacent to the second pure layer 130, may be filled with the same ionomer as the second ionomer 22 of the second pure layer 130.

That is, in the embodiment of the present disclosure, since the interface between the first and second ionomers 21 and 22 is present in the second porous sub-support 12 (i.e. since the first ionomer 21 present in the second porous sub-support 12 functions as an anchor), (i) strong adhesive force between the first and second porous sub-supports 11 and 12 can be secured, the adhesive force being no less than that of a stacking structure of porous supports joined by an adhesive and/or hot press, and (ii) the ionic conductivity deterioration that may be caused when the supports are joined to each other by the adhesive and/or hot press can be prevented. Consequently, the polymer electrolyte membrane 100 according to the embodiment of the present disclosure may have excellent mechanical properties without degradation in performance, such as ionic conductivity.

The first ionomer 21 may be identical to or different from the second ionomer 22.

Hereinafter, a method of manufacturing the polymer electrolyte membrane 100 according to the embodiment of the present disclosure illustrated in FIG. 1 will be described in detail.

The method according to the embodiment of the present disclosure includes (i) a step of casting a first ionomer dispersion liquid including a first ionomer 21 onto a glass plate, (ii) a step of placing a first porous sub-support 11 of a dry state on the first ionomer dispersion liquid such that the first porous sub-support 11 becomes an entirely wet state, (iii) a step of adding a second porous sub-support 12 of a dry state on the first porous sub-support 11 immediately after the first porous sub-support 11 becomes the entirely wet state, such that the first and second porous sub-supports 11 and 12 are in contact with each other, (iv) a step of applying a second ionomer dispersion liquid including a second ionomer 22 to the second porous sub-support 12 such that the second porous sub-support 12 becomes an entirely wet state, and (v) a step of drying the first and second porous sub-supports 11 and 12 of the wet state.

The second porous sub-support 12 may be added on the first porous sub-support 11 while the first porous sub-support is maintained in the entirely wet state with the first ionomer dispersion liquid, whereby some of the second pores of the second porous sub-support 12 may be filled with the first ionomer dispersion liquid. As previously described, therefore, the first ionomer 21 present in some of the second pores of the second porous sub-support 12 functions as an anchor, whereby strong adhesive force between the first and second porous sub-supports 11 and 12 may be secured, and mechanical properties of the polymer electrolyte membrane 100 may be remarkably improved.

Furthermore, according to the present disclosure, high adhesive force between the first and second porous sub-supports 11 and 12 can be acquired without using a separate adhesive and/or a hot press process, and thus ionic conductivity deterioration that may be caused when the supports are joined to each other by the adhesive and/or hot press may be prevented. Consequently, the polymer electrolyte membrane 100 according to the embodiment of the present disclosure may have excellent mechanical properties without degradation in performance, such as ionic conductivity.

That is, the polymer electrolyte membrane 100 according to the present disclosure is distinguished from a stacked type polymer electrolyte membrane, which is manufactured by manufacturing two or more polymer electrolyte membranes and joining them to each other by an adhesive and/or hot press, in that a pure layer made of only an ionomer is not included between the first and second porous sub-supports 11 and 12. Unlike the present disclosure, in the stacked type polymer electrolyte membrane, (i) an ionic conductivity deterioration due to the adhesive and/or hot press is inevitably caused, as previously described, and (ii) a pure layer made of only an ionomer is present between the porous supports, whereby resistance to movement of hydrogen gas is relatively lowered, and therefore chemical durability is remarkably reduced due to relatively high hydrogen crossover.

As previously described, the first and second porous sub-supports 11 and 12 may be the same kind of supports or different kinds of supports. For example, both the first and second porous sub-supports 11 and 12 may be e-PTFE films, or both the first and second porous sub-supports 11 and 12 may be nonwoven webs.

As previously described, in the embodiment of the present disclosure, each of the first and second porous sub-supports 11 and 12 is a relatively highly isotropic support having a MD/TD tensile elongation ratio of 0.9 to 1.5, more specifically 1 to 1.3.

Nevertheless, for an e-PTFE film that may be used as each of the first and second porous sub-supports 11 and 12 according to the present disclosure, there is somewhat of a difference between mechanical properties in an expansion direction (i.e. MD) and mechanical properties in a direction (i.e. TD) perpendicular to the expansion direction (i.e. the MD/TD tensile elongation ratio may be slightly lower than 1 or slightly higher than 1). When both the first and second porous sub-supports 11 and 12 are e-PTFE films, therefore, the second porous sub-support 12 may be added on the first porous sub-support 11 such that expansion directions thereof are perpendicular to each other, whereby it is possible to further enhance total isotropy of the porous support 10, and therefore it is possible to further improve mechanical properties of the polymer electrolyte membrane 100.

The step of applying a second ionomer dispersion liquid including a second ionomer 22 to the second porous sub-support 12 such that the second porous sub-support 12 becomes an entirely wet state may include (i) a step of, when the first ionomer 21 and the second ionomer 22 are identical to each other, immersing the first and second porous sub-supports 11 and 12 in the second ionomer dispersion liquid after adding the second porous sub-support 12 on the first porous sub-support 11 or (ii) a step of applying the second ionomer dispersion liquid to an exposed surface of the second porous sub-support 12 using a coating method, such as bar coating, comma coating, slot-die coating, screen printing, spray coating, doctor blade coating, and so on.

Each of the first and second ionomer dispersion liquids may be a dispersion liquid in which the first ionomer 21 or the second ionomer 22 is dispersed in water, a hydrophilic solvent, an organic solvent, or a mixed solvent of two or more thereof.

The hydrophilic solvent may have at least one functional group selected from the group consisting of alcohol, isopropyl alcohol, ketone, aldehyde, carbonate, carboxylate, carboxylic acid, ether, and amide, each of which includes a straight-chain or branched-chain saturated or unsaturated hydrocarbon having a carbon number ranging from 1 to 12 as the main chain thereof. Each thereof may include an aliphatic or aromatic cyclic compound as at least a portion of the main chain thereof.

The organic solvent may be N-methylpyrrolidone, dimethyl sulfoxide, tetrahydrofuran, or a mixture of two or more thereof.

In order to completely fill the pores of the first and second porous sub-supports 11 and 12 with the ionomers 21 and 22, various factors, such as temperature and time, may be appropriately adjusted. For example, at least one of thicknesses of the first and second porous sub-supports 11 and 12, concentrations of the first and second ionomer dispersion liquids, and the kind of the solvent or dispersion medium may be appropriately determined.

In the step of drying the first and second porous sub-supports 11 and 12, primary drying may be performed at 60°C to 150°C for 15 minutes to 1 hour, and secondary drying may be performed at 150°C to 190°C for 3 minutes to 1 hour. Specifically, primary drying may be performed at 60°C to 120°C for 15 minutes to 1 hour, and secondary drying may be performed at 170°C to 190°C for 3 minutes to 1 hour. If the primary drying temperature is less than 60°C or the primary drying time is less than 15 minutes, the solvent/dispersion medium may not be primarily discharged, whereby it is not possible to obtain a highly dense membrane. If the secondary drying temperature is greater than 190°C or the secondary drying time is greater than 1 hour, the ion exchange group (e.g. the sulfonic acid group) may be decomposed, whereby performance of the membrane may be degraded.

Although the polymer electrolyte membrane 100 illustrated in FIG. 1 includes only two porous sub-supports 11 and 12, the polymer electrolyte membrane 100 according to the present disclosure may include more than two porous sub-supports in consideration of specific physical properties that are required.

In another embodiment of the present disclosure, the polymer electrolyte membrane 100 may include a single porous support 10 instead of a plurality of porous sub-supports 11 and 12, and an ionomer dispersion liquid with which pores of the single porous support 10 are to be filled may be manufactured by adding an ionomer to a solvent and mixing the same using a resonant sound wave method. The ionomer dispersion liquid thus manufactured has high dispersion stability.

High pressure may be applied to the mixture obtained through mixing using the resonant sound wave method in order to further increase dispersion stability of the ionomer dispersion liquid.

In the present disclosure, the ionomer dispersion liquid having high dispersion stability means an ionomer dispersion liquid which, when viscosity and shear stress thereof are measured using a rheometer while a shear rate is increased from $0.001$ $s^{-1}$ to $1000$ $s^{-1}$ and then decreased from $1000$ $s^{-1}$ to $0.001$ $s^{-1}$, shows a viscosity ratio defined by Equation 5 below of 1.7 or less and a shear stress ratio defined by Equation 6 below of 1.5 or less.

$$[\text{Equation 5}]: \text{Viscosity ratio} = \eta_2/\eta_1$$

(Where $\eta_1$ indicates first viscosity of the ionomer dispersion liquid when the shear rate is 1 $s^{-1}$, measured while the shear rate is increased, and $\eta_2$ indicates second viscosity of the ionomer dispersion liquid when the shear rate is 1 $s^{-1}$, measured while the shear rate is decreased.)

$$[\text{Equation 6}]: \text{Shear stress ratio} = \sigma_2/\sigma_1$$

(Where $\sigma_1$ indicates first shear stress, which is shear stress when the shear rate is 1 s$^{-1}$, measured while the shear rate is increased, and $\sigma_2$ indicates second shear stress, which is shear stress when the shear rate is 1 s$^{-1}$, measured while the shear rate is decreased.)

An ionomer dispersion liquid having sufficiently high dispersion stability while containing high-content ionomer solids may optimize morphology of the ionomer in the polymer electrolyte membrane 100, whereby it is possible to improve ionic conductivity of the polymer electrolyte membrane 100.

Specifically, the ionomer dispersion liquid having high dispersion stability has excellent impregnability and small and uniform particle size. When the porous support 10 is impregnated or coated with the ionomer dispersion liquid to form a reinforced composite membrane type polymer electrolyte membrane 100, therefore, a water channel, which provides a movement path for hydrogen ions, is well formed in the through-plane direction as well as the in-plane direction, whereby it is possible to improve ionic conductivity of the polymer electrolyte membrane 100 in both the in-plane direction and the through-plane direction.

Even when a single porous support 10 that is sufficiently thick to such an extent that the thickness $T_c$ of the composite layer 110 is equivalent to 30 to 80% of the thickness $T_{total}$ of the polymer electrolyte membrane 100 is used, therefore, it is possible to offset any ionic conductivity deterioration, which otherwise might be caused due to the use of the thick single porous support 10, by using the ionomer dispersion liquid of high dispersion stability according to the present disclosure. Consequently, the polymer electrolyte membrane 100 obtained by this embodiment may have excellent mechanical durability (i.e. an IS/FS ratio of 0.4 to 1.0) by virtue of the thick single porous support 10, and may have excellent ionic conductivity (i.e. in-plane and through-plane ionic conductivities of 0.03 to 0.1 S/cm under conditions of 80°C and 50 %RH) by virtue of the ionomer dispersion liquid having high dispersion stability.

Of course, the ionomer dispersion liquid having high dispersion stability may also be preferably applied to a polymer electrolyte membrane 100 having a plurality of porous sub-supports 11 and 12.

The membrane-electrode assembly according to the present disclosure includes an anode, a cathode, and the polymer electrolyte membrane 100, located between the anode and the cathode. The membrane-electrode assembly is identical to a general membrane-electrode assembly for fuel cells except that the polymer electrolyte membrane 100 according to the present disclosure is used as the polymer electrolyte membrane, and therefore a detailed description thereof will be omitted from this specification.

Hereinafter, examples of the present disclosure will be described in detail with reference to the accompanying drawings such that the examples of the present disclosure can be easily implemented by a person having ordinary skill in the art to which the present disclosure pertains. However, the present disclosure may be realized in various different forms, and is not limited to the examples described herein.

[Manufacturing Example: Manufacture of polymer electrolyte membrane]

(Example 1)

A first porous sub-support (e-PTFE, pore size: 0.10 $\mu$m to 0.2 $\mu$m, thickness: 8 $\mu$m, and MD/TD tensile elongation ratio: 1.3) was wetted with a first ionomer dispersion liquid ("mixing using the resonant sound wave method + high-pressure dispersion", viscosity ratio: 1.31, and shear stress ratio: 1.08) including 20 wt% of a highly fluorinated polymer having an equivalent weight (EW) of 700 g/eq.

A second porous sub-support (e-PTFE, pore size: 0.10 $\mu$m to 0.2 $\mu$m, thickness: 8 $\mu$m, and MD/TD tensile elongation ratio: 1.3) was added on the first porous sub-support support of wet state such that expansion directions thereof are intersected.

A second ionomer dispersion liquid ("mixing using the resonant sound wave method + high-pressure dispersion", viscosity ratio: 1.31, and shear stress ratio: 1.08) including 20 wt% of a highly fluorinated polymer having an equivalent weight (EW) of 700 g/eq was additionally applied to the second porous sub-support added on the first porous sub-support.

Subsequently, the first porous sub-support and the second porous sub-support were dried at 60°C for 1 hour and then further dried at 150°C for 30 minutes to manufacture a polymer electrolyte membrane having a thickness $T_{total}$ of 20 $\mu$m. The thickness $T_c$ of the composite layer was 40% of the thickness $T_{total}$ of the polymer electrolyte membrane.

(Example 2)

A first porous sub-support (e-PTFE, pore size: 0.10 $\mu$m to 0.2 $\mu$m, thickness: 8 $\mu$m, and MD/TD tensile elongation ratio: 1.2) was wetted with a first ionomer dispersion liquid (mixing using the resonant sound wave method, viscosity ratio: 1.36, and shear stress ratio: 1.06) including 20 wt% of a highly fluorinated polymer having an equivalent weight (EW) of 700 g/eq.

A second porous sub-support (e-PTFE, pore size: 0.10 $\mu$m to 0.2 $\mu$m, thickness: 8 $\mu$m, and MD/TD tensile elongation ratio: 1.2) was added on the first porous sub-support support of wet state such that expansion directions thereof intersected each other. At this time, the first porous sub-support and the second porous sub-support were stacked such that the expansion direction of the first porous sub-support and the expansion direction of the second porous sub-support were perpendicular to each other.

A second ionomer dispersion liquid (mixing using the resonant sound wave method, viscosity ratio: 1.36, and shear stress ratio: 1.06) including 20 wt% of a highly fluorinated polymer having an equivalent weight (EW) of 700 g/eq was additionally applied to the second porous sub-support added on the first porous sub-support.

Subsequently, the first porous sub-support and the second porous sub-support were dried at 60°C for 1 hour and then further dried at 150°C for 30 minutes to manufacture a polymer electrolyte membrane having a thickness $T_{total}$ of 20 $\mu$m. The thickness $T_c$ of the composite layer was 40% of the thickness $T_{total}$ of the polymer electrolyte membrane.

(Comparative Example 1)

A porous sub-support (e-PTFE, pore size: 0.10 $\mu$m to 0.2 $\mu$m, thickness: 6 $\mu$m, and MD/TD tensile elongation ratio: 1.4) was wetted with a first ionomer dispersion liquid ("mixing using the resonant sound wave method + high-pressure dispersion", viscosity ratio: 1.36, and shear stress ratio: 1.08) including 20 wt% of a highly fluorinated polymer having an equivalent weight (EW) of 700 g/eq.

Subsequently, a second ionomer dispersion liquid ("mixing using the resonant sound wave method + high-pressure dispersion", viscosity ratio: 1.31, and shear stress ratio: 1.08) including 20 wt% of a highly fluorinated polymer having an equivalent weight (EW) of 700 g/eq was additionally applied to the porous sub-support.

Subsequently, the porous sub-support was dried at 60°C for 1 hour and then further dried at 150°C for 30 minutes to manufacture a polymer electrolyte membrane having a thickness $T_{total}$ of 12 $\mu$m. The thickness $T_c$ of the composite layer was 25% of the thickness $T_{total}$ of the polymer electrolyte membrane.

[Measurement of physical properties of polymer electrolyte membrane]

The IS/FS ratio, in-plane ionic conductivity, and through-plane ionic conductivity of each of the polymer electrolyte membranes according to the above examples and comparative example were measured using the following methods, and the results are shown in Table 1 below.

* Ratio of stab initial strain and stab final strain (IS/FS ratio)

A sample of 50 mm x 50 mm was taken, and stab resistance of the sample was measured using a universal test machine (UTM) (Instron 5966). A jig for puncture testing (sample holder and probe) according to ASTM F1342 provided by Instron Company was used as an accessory for repeated stabs. Specifically, stabs (load: 10 N) are repeatedly performed using a probe under the following conditions after fixing the sample to the holder (the distance from a base level to the sample: 100 mm), and a decrease in the distance (i.e. "displacement") due to each stab was measured. At this time, displacement under a load of 0.2 N was regarded as a zero point.

- Temperature: 23±2 °C
- Relative humidity: 50±5%
- Mode: Compression mode
- Cycle period: 20 times
- Test speed: 100 mm/min

Strain when stabs (load: 10 N) were repeatedly performed twice using the probe (i.e. "stab initial strain") and strain when stabs (load: 10 N) were repeatedly performed 20 times using the probe (i.e. "stab final strain") were calculated by Equations 1 and 2 below, respectively.

$$[\text{Equation 2}]: \text{IS (\%)} = [(D_2 - D_1)/D_1] \times 100$$

$$[\text{Equation 3}]: \text{FS (\%)} = [(D_{20} - D_1)/D_1] \times 100$$

Where IS indicates stab initial strain, FS indicates stab final strain, $D_1$ indicates displacement (mm) caused due to a first stab, $D_2$ indicates displacement (mm) caused due to a second stab, and $D_{20}$ indicates displacement (mm) caused due to a twentieth stab.

The IS was divided by the FS to calculate the IS/FS ratio.

* In-plane ionic conductivity

In-plane ionic conductivity of the polymer electrolyte membrane was measured at 80°C and 50% RH using a magnetic suspension balance apparatus (Bell Japan Company).

* Through-plane ionic conductivity

Through-plane ionic conductivity of the polymer electrolyte membrane was measured using a through-plane membrane test system (Scribner Associates, MTS 740) according to a constant current four-terminal method. Specifically, an alternating current potential difference generated in a sample (10 mm x 30 mm) was measured while applying alternating current to opposite sides of the sample under conditions of 80°C and 50% RH to obtain membrane resistance R (S2). Subsequently, through-plane ionic conductivity of the polymer electrolyte membrane was calculated using Equation 4 below.

$$[\text{Equation 4}]: \sigma = L/[R \times A]$$

(Where $\sigma$ indicates through-plane ionic conductivity (S/cm), L indicates the distance (cm) between electrodes, R indicates membrane resistance (S2), and A indicates effective area ($cm^2$) of the membrane.)

[Measurement of wet/dry cycles of membrane-electrode assembly (MEA)]

A membrane-electrode assembly (MEA) was manufactured using the polymer electrolyte membrane, and wet/dry cycles of the membrane-electrode assembly were measured according to an accelerated durability test method of the NEDO protocol. Specifically, wet/dry cycles each constituted by humidification (150% RH, 2 minutes) and drying (0% RH, 2 minutes) were repeated while nitrogen gas was injected to an anode and a cathode at a flow rate of 800 NmL/min. Hydrogen crossover of the MEA was measured every 1000 cycles using linear sweep voltammetry (LSV). Specifically, a 0.2-0.5 V section was swept at a scan rate of 0.5 mV/s to extract current density data of a 0.4-0.5 V section while hydrogen gas was injected to the anode at a flow rate of 200 NmL/min and nitrogen gas was injected to the cathode at a flow rate of 200 NmL/min at 80°C and 100% RH. Linear fitting of the data was performed to acquire a current density value of a section having a voltage of 0. When the measured hydrogen crossover was 10 or more times the initial hydrogen crossover, evaluation was finished, and the number of cycles performed until then was taken as wet/dry cycles of the MEA. For example, when the hydrogen crossover measured after a total of 15,000 cycles is completed is less than 10 times the initial hydrogen crossover but the hydrogen crossover measured after a total of 16,000 cycles is completed is 10 or more times the initial hydrogen crossover, the wet/dry cycles of the MEA is "15,000 cycles or more".

[Table 1]

|  | Example 1 | Example 2 | Comparative Example 1 |
|---|---|---|---|
| IS/FS ratio | 0.6 | 0.7 | 0.35 |
| MEA wet/dry cycles | 50,000 or more | 60,000 or more | 20,000 or less |
| In-plane ionic | 0.040 | 0.043 | 0.041 |
| conductivity (S/cm) |  |  |  |
| Through-plane ionic conductivity (S/cm) | 0.038 | 0.038 | 0.040 |

As can be seen from Table 1 above, the polymer electrolyte membrane according to Comparative Example 1, in which the thickness $T_c$ of the composite layer was 25% of the thickness $T_{total}$ of the polymer electrolyte membrane and the MD/TD tensile elongation ratio of the porous support was 1.4, had good ionic conductivity but exhibited a low MD/TD tensile elongation ratio (i.e. a ratio of stab initial strain to stab final strain) of less than 0.4. In addition, the membrane-electrode assembly (MEA) manufactured using the polymer electrolyte membrane according to Comparative Example 1 exhibited a low durability of 20,000 wet/dry cycles or less as measured according to the accelerated durability test method of the NEDO protocol.

In contrast, each of the polymer electrolyte membranes according to Examples 1 and 2, in which the thickness $T_c$ of the composite layer was 40% of the thickness $T_{total}$ of the polymer electrolyte membrane and the porous sub-supports each having an MD/TD tensile elongation ratio of 1.3 or less were stacked such that expansion directions thereof were perpendicular to each other, had greatly higher mechanical durability (i.e. an IS/FS ratio of 0.4 or more) than the polymer electrolyte membrane according to Comparative Example 1, and each of the membrane-electrode assemblies (MEAs) manufactured using the same exhibited a high durability of 50,000 wet/dry cycles or more as measured according to the accelerated durability test method of the NEDO protocol. In addition, each of the polymer electrolyte membranes according to Examples 1 and 2 exhibited excellent ionic conductivity ranking next to the polymer electrolyte membrane according to Comparative Example 1 although each of the polymer electrolyte membranes according to Examples 1 and 2 has greatly higher mechanical durability than the polymer electrolyte membrane according to Comparative Example 1.

## Claims

1. A polymer electrolyte membrane comprising a composite layer, wherein

   the composite layer comprises a porous support having a plurality of pores and an ionomer with which the pores are filled, and
   a ratio (IS/FS) of stab initial strain (IS) of the polymer electrolyte membrane to stab final strain (FS) of the polymer electrolyte membrane is 0.4 to 1.0.

2. The polymer electrolyte membrane according to claim 1, wherein the polymer electrolyte membrane has an in-plane ionic conductivity of 0.03 to 0.1 S/cm and a through-plane ionic conductivity of 0.03 to 0.1 S/cm under conditions of 80°C and 50% RH.

3. The polymer electrolyte membrane according to claim 1, wherein the polymer electrolyte membrane has a stab initial strain (IS) of 1 to 6% and a stab final strain (FS) of 2 to 8%.

4. The polymer electrolyte membrane according to claim 1, wherein

   the composite layer has a first surface and a second surface opposite the first surface,
   the polymer electrolyte membrane further comprises:

   a first pure layer disposed on the first surface, the first pure layer comprising a first ionomer; and
   a second pure layer disposed on the second surface, the second pure layer comprising a second ionomer, and
   a thickness of the composite layer is 30 to 80% of a thickness of the polymer electrolyte membrane.

5. The polymer electrolyte membrane according to claim 4, wherein the thickness of the polymer electrolyte membrane is 10 to 50 $\mu$m.

6. The polymer electrolyte membrane according to claim 4, wherein at least a portion of the ionomer in the composite layer is identical to at least one of the first ionomer and the second ionomer.

7. The polymer electrolyte membrane according to claim 4, wherein

   the porous support comprises: a first porous sub-support having the first surface; and a second porous sub-support having the second surface,
   the first porous sub-support has first pores filled with an ionomer identical to the first ionomer,
   the second porous sub-support has second pores,
   some of the second pores, which are adjacent to the first porous sub-support, are filled with an ionomer identical to the first ionomer, and
a remainder of the second pores, which are adjacent to the second pure layer, are filled with an ionomer identical to the second ionomer.

8. The polymer electrolyte membrane according to claim 7, wherein the first and second porous sub-supports are in contact with each other.

9. The polymer electrolyte membrane according to claim 4, wherein

the porous support comprises: a first porous sub-support having the first surface; a second porous sub-support having the second surface; and at least one third porous sub-support disposed between the first and second porous sub-supports, and
the first, second, and third porous sub-supports are in contact with each other.

10. The polymer electrolyte membrane according to claim 4, wherein the first ionomer is identical to the second ionomer.

11. A membrane-electrode assembly comprising:

an anode;
a cathode; and
the polymer electrolyte membrane according to claim 1, the polymer electrolyte membrane being disposed between the anode and the cathode.

# FIG. 1

## INTERNATIONAL SEARCH REPORT

| International application No. |
|---|
| **PCT/KR2021/017389** |

**A.    CLASSIFICATION OF SUBJECT MATTER**

**H01M 8/1067**(2016.01)i; **H01M 8/1053**(2016.01)i; **H01M 8/1058**(2016.01)i; **H01M 8/1004**(2016.01)i

According to International Patent Classification (IPC) or to both national classification and IPC

**B.    FIELDS SEARCHED**

Minimum documentation searched (classification system followed by classification symbols)

H01M 8/1067(2016.01); C08J 5/22(2006.01); C08J 9/42(2006.01); H01M 8/1004(2016.01); H01M 8/1018(2016.01); H01M 8/1023(2016.01); H01M 8/1053(2016.01); H01M 8/106(2016.01); H01M 8/1069(2016.01); H01M 8/1081(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 지지체(porous support), 공극(pore), 함침(impregnation), 이오노머 (ionomer), 내구성(durability), 찌름 최종 변형률(stab final strain), 찌름 초기 변형률(stab initial strain), 막-전극 어셈블리 (membrane-electrode assembly)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0019700 A (W.L. GORE & ASSOCIATES, INC. et al.) 24 February 2020 (2020-02-24)<br>See claims 1 and 51; paragraphs [0050] and [0051]; and figures 2a-2c. | 1-11 |
| A | KR 10-2020-0139459 A (INDUSTRY-ACADEMIC COOPERATION FOUNDATION GYEONGSANG NATIONAL UNIVERSITY) 14 December 2020 (2020-12-14)<br>See entire document. | 1-11 |
| A | KR 10-2018323 B1 (KOREA INSTITUTE OF ENERGY RESEARCH) 04 September 2019 (2019-09-04)<br>See entire document. | 1-11 |
| A | KR 10-1877753 B1 (SANG-A FRONTEC CO., LTD.) 13 July 2018 (2018-07-13)<br>See entire document. | 1-11 |
| A | JP 2019-186201 A (TORAY IND. INC.) 24 October 2019 (2019-10-24)<br>See entire document. | 1-11 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 March 2022** | **10 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/017389** |

### C. DOCUMENTS CONSIDERED TO BE RELEVANT

| Category* | Citation of document, with indication, where appropriate, of the relevant passages | Relevant to claim No. |
| --- | --- | --- |
| PX | WO 2021-133044 A1 (KOLON INDUSTRIES, INC.) 01 July 2021 (2021-07-01)<br>See claims 1, 2 and 4-10. | 1-11 |

Form PCT/ISA/210 (second sheet) (July 2019)

**INTERNATIONAL SEARCH REPORT**
Information on patent family members

International application No.

**PCT/KR2021/017389**

| Patent document cited in search report | | | Publication date (day/month/year) | Patent family member(s) | | | Publication date (day/month/year) |
|---|---|---|---|---|---|---|---|
| KR | 10-2020-0019700 | A | 24 February 2020 | CA | 3064784 | A1 | 20 December 2018 |
| | | | | CN | 110741498 | A | 31 January 2020 |
| | | | | EP | 3639315 | A1 | 22 April 2020 |
| | | | | EP | 3639315 | B1 | 11 August 2021 |
| | | | | EP | 3910712 | A1 | 17 November 2021 |
| | | | | JP | 2020-524367 | A | 13 August 2020 |
| | | | | US | 2020-0243887 | A1 | 30 July 2020 |
| | | | | WO | 2018-231232 | A1 | 20 December 2018 |
| | | | | WO | 2018-232254 | A1 | 20 December 2018 |
| KR | 10-2020-0139459 | A | 14 December 2020 | KR | 10-2255170 | B1 | 25 May 2021 |
| KR | 10-2018323 | B1 | 04 September 2019 | KR | 10-2019-0004949 | A | 15 January 2019 |
| KR | 10-1877753 | B1 | 13 July 2018 | KR | 10-2017-0114610 | A | 16 October 2017 |
| | | | | WO | 2017-175891 | A1 | 12 October 2017 |
| JP | 2019-186201 | A | 24 October 2019 | KR | 10-2021-0083195 | A | 06 July 2021 |
| WO | 2021-133044 | A1 | 01 July 2021 | KR | 10-2021-0083195 | A | 06 July 2021 |

Form PCT/ISA/210 (patent family annex) (July 2019)